# EUROPÄISCHE PATENTSCHRIFT

(11) **EP 3 052 363 B1**
(45) Veröffentlichungstag und Bekanntmachung des Hinweises auf die Patenterteilung: **22.11.2017**
(21) Anmeldenummer: 14780458.7
(22) Anmeldetag: 30.09.2014
(51) Int. Cl.: B60W 50/14, B60K 35/00, B60W 30/16, B60W 30/12

(54) **VORRICHTUNG ZUM AUTOMATISCHEN FAHREN EINES FAHRZEUGS**
DEVICE FOR AUTOMATICALLY DRIVING A VEHICLE
DISPOSITIF POUR LA CONDUITE AUTOMATIQUE D'UN VÉHICULE

(30) Priorität: 01.10.2013 DE 102013110909
(43) Veröffentlichungstag der Anmeldung: 10.08.2016
(73) Patentinhaber: Volkswagen Aktiengesellschaft, 38440 Wolfsburg (DE)
(72) Erfinder: KLEEN, Andro, 38100 Braunschweig (DE); SCHÄFER, Helge, 31275 Lehrte Kolshorn (DE); RICKNÄS, Daniel, S-11664 Stockholm (SE); MEINECKE, Marc-Michael, 38524 Sassenburg (DE)
(74) Vertreter: Sticht, Andreas
(86) Internationale Anmeldenummer: PCT/EP2014/070981
(87) Internationale Veröffentlichungsnummer: WO 2015/049255

(56) Entgegenhaltungen:
- EP-A2- 2 143 587
- DE-A1- 10 131 478
- DE-A1-102007 058 437
- DE-A1-102009 041 198

## Beschreibung

Die vorliegende Erfindung betrifft eine Vorrichtung, welche zum automatischen Fahren eines Fahrzeugs ausgestaltet ist.

Die DE 101 31 478 A1 zeigt den Oberbegriff von Anspruch 1.

Die DE 10 2009 048 954 A1 offenbart ein Verfahren und eine Vorrichtung zum automatischen Betreiben eines Fahrzeugs in einem keine Nutzeraktion erfordernden autonomen Fahrbetrieb. Dabei wird beispielsweise bei einem sich auflösenden Stau eine Warnung an einen Fahrer ausgegeben, dass ein Abschalten eines Assistenzsystems bevorsteht, so dass die Aufmerksamkeit des Fahrers durch die entsprechende Warnung wieder auf die Verkehrslage zurückgeführt werden kann. Wenn der Fahrer entsprechende Warnungen ignoriert, kommt es zu einer automatischen Stillstandsbremsung.

Die fortschreitende Entwicklung der Fahrzeugelektronik erlaubt den Einsatz automatischer Fahrfunktionen, bei welchen sowohl die Längssteuerung als auch die Quersteuerung des Fahrzeugs automatisch (ohne jegliche manuelle Betätigung seitens eines Menschen) durchgeführt wird. Ein Einsatz eines solchen Systems zum automatischen Fahren eines Fahrzeugs ist dabei aufgrund der homogenen Randbedingungen gerade in Stausituationen bereits heute schon denkbar. Insbesondere bei Lastkraftwagen können dadurch wichtige Ressourcen, wie Kraftstoff, aber auch Lenkzeiten des Fahrers, geschont werden. Wenn das Fahrzeug automatisch gefahren wird, kann der Fahrer seine Aufmerksamkeit dem Verkehr entziehen und sich anderen Tätigkeiten, beispielsweise der Nutzung eines Mobilgeräts, zuwenden.

Da das Fahrzeug nur unter bestimmten Voraussetzungen im Stau automatisch gefahren werden kann, ist es von zentraler Bedeutung, dass der Fahrer relativ rasch erfassen kann, in welchem Zustand sich eine automatische Fahrfunktion aktuell befindet. Darüber hinaus soll der Fahrer in der Lage sein, die Systemgrenzen eines Systems zum automatischen Fahren eines Fahrzeugs einfach zu überblicken.

Die vorliegende Erfindung stellt sich die Aufgabe, eine Vorrichtung für ein Fahrzeug bereitzustellen, welche die vorab beschriebenen Ziele erreicht.

Erfindungsgemäß wird diese Aufgabe durch eine Vorrichtung für ein Fahrzeug nach Anspruch 1 gelöst. Die abhängigen Ansprüche definieren bevorzugte und vorteilhafte Ausführungsformen der vorliegenden Erfindung.

Im Rahmen der vorliegenden Erfindung wird eine Vorrichtung für ein Fahrzeug bereitgestellt. Dabei ist die Vorrichtung zum zumindest teilweisen automatischen Fahren des Fahrzeugs ausgestaltet und umfasst einen oder mehrere Sensoren, eine Steuerung und eine Anzeige. Der oder die Sensoren sind ausgestaltet, um eine oder mehrere Informationen zu erfassen. Die Vorrichtung ist wiederum ausgestaltet, um einen automatischen Fahrzustand, in welchem das Fahrzeug automatisch fährt, zu erfassen und um in diesem automatischen Fahrzustand (d.h. wenn der automatische Fahrzustand erfasst worden ist) eine oder mehrere vorbestimmte Bedingungen, welche eingehalten werden müssen, um den automatischen Fahrzustand aufrechtzuerhalten zusammen mit einem Hinweis, ob die jeweilige Bedingung erfüllt ist oder nicht, gleichzeitig auf der Anzeige darzustellen. Darüber hinaus ist die Vorrichtung ausgestaltet, um abhängig von der oder den Informationen zu bestimmen, ob die jeweilige Bedingung eingehalten wird oder nicht.

Mit anderen Worten stellt die Vorrichtung für den Fall, dass das Fahrzeug automatisch gefahren (d.h. die Längs- und die Querführung des Fahrzeugs wird von einer Staufunktion gesteuert) wird, auf ihrer Anzeige die mehreren Bedingungen zusammen mit dem Hinweis, ob die jeweilige Bedingung erfüllt ist, dar. Dadurch erhält der Fahrer des Fahrzeugs zum einen einen raschen Überblick darüber, welche Bedingungen einzuhalten sind, um den automatischen Fahrzustand beizubehalten. Darüber hinaus erkennt der Fahrer rasch, falls eine dieser Bedingungen nicht mehr eingehalten wird.

Die Information oder die Informationen, welche von dem oder den Sensoren erfasst wird/werden, ist/sind dabei insbesondere aus folgender Informationsmenge ausgewählt:
- Eine aktuelle Geschwindigkeit des Fahrzeugs.
- Eine Information, ob das direkt vor dem Fahrzeug befindliche Führungsfahrzeug einen ausreichend geringen Abstand zu dem Fahrzeug aufweist. Als Führungsfahrzeug wird dabei dasjenige Fahrzeug bezeichnet, welches direkt vor dem Fahrzeug in derselben Fahrspur wie das Fahrzeug fährt. Nur wenn der Abstand zu diesem Führungsfahrzeug unter einem vorbestimmten Abstandsschwellenwerts liegt, kann das Fahrzeug automatisch hinter dem Führungsfahrzeug herfahren.
- Eine Information, ob eine Spurmarkierung auf einer von dem Fahrzeug aktuell befahrenen Straße vorhanden ist. Damit das Fahrzeug automatisch in der Fahrspur des Führungsfahrzeugs fahren kann, sollten entsprechende Fahrspurmarkierungen auf der Fahrbahn bzw. auf der Straße vorhanden sein. Werden entsprechende Spurmarkierungen nicht erfasst, sollte das automatische Fahren beendet werden.
- Einen Öffnungszustand einer Tür des Fahrzeugs. Nur wenn alle Türen des Fahrzeugs geschlossen sind, kann aus Sicherheitsgründen der automatische Fahrzustand beibehalten werden.
- Eine Information, ob der Fahrer des Fahrzeugs angeschnallt ist. Aus Sicherheitsgründen sollte der Fahrer angeschnallt sein, wenn das Fahrzeug automatisch gefahren wird.
- Eine Information, ob sich vor dem Fahrzeug innerhalb eines vorbestimmten Abstands von dem Fahrzeug ein Objekt (beispielsweise ein Fußgänger) befindet. Wenn innerhalb des vorbestimmten Abstands vor dem Fahrzeug ein Objekt erfasst wird, welches kein Fahrzeug ist, sollte das automatische Fahren des Fahrzeugs aus Sicherheitsgründen abgebrochen werden.
- Ein Typ der aktuell von dem Fahrzeug befahrenen Straße. Nur wenn es sich bei der aktuell von dem Fahrzeug befahrenen Straße um eine Autobahn oder um eine Straße mit einer von dem Fahrzeug nicht zu überfahrenden Abtrennung von der Fahrspur des Gegenverkehrs handelt, kann das automatische Fahren aktiviert bzw. beibehalten werden.

Anhand der Informationen können vorteilhafterweise die Bedingungen, welche zum Beibehalten des automatischen Fahrzustands erfüllt sein müssen, dem Fahrer kompakt dargestellt werden.

Mit Hilfe der aktuellen Geschwindigkeit des Fahrzeugs kann auf der Anzeige eine Wahrscheinlichkeit dargestellt werden, mit welcher der automatische Fahrzustand aufgrund einer zu hohen Geschwindigkeit beendet wird.

Der automatische Fahrzustand sollte nur für Geschwindigkeiten des Fahrzeugs unterhalb einer maximalen Geschwindigkeit (beispielsweise 50 km/h) beibehalten werden. Sollte sich die Geschwindigkeit des Fahrzeugs dieser maximalen Geschwindigkeit nähern, kann durch eine farbliche Änderung einer Geschwindigkeitsanzeige auf der Anzeige die sich erhöhende Wahrscheinlichkeit für einen Abbruch des automatischen Fahrzustands dargestellt werden.

Insbesondere kommt die erfindungsgemäße Vorrichtung in einen Warnzustand, wenn eine der für den automatischen Fahrzustand einzuhaltenden Bedingungen nicht mehr erfüllt wird. In dem Warnzustand kann dann diejenige Bedingung, welche nicht mehr erfüllt wird, zusammen mit einem Kennzeichen, welches kennzeichnet, dass die entsprechende Bedingung nicht mehr erfüllt wird, dargestellt werden. Dabei kann die nicht mehr erfüllte Bedingung größer dargestellt werden, als wie sie dargestellt wird, wenn sie erfüllt ist. Vorteilhafterweise wird die nicht erfüllte Bedingung in einem mittleren Bereich der Anzeige dargestellt, um die Aufmerksamkeit des Betrachters auf diese nicht erfüllte Bedingung zu lenken. Darüber hinaus wird ein Bedienelement aktiviert bzw. sensibilisiert (d.h. empfindlich geschaltet, um auf eine Betätigung des Bedienelements reagieren zu können). Wenn die Betätigung des nunmehr aktivierten Bedienelements erfasst wird, wird das automatische Fahren des Fahrzeugs beendet, so dass die erfindungsgemäße Vorrichtung von dem Warnzustand in einen manuellen Fahrzustand kommt, in welchem das Fahrzeug manuell von dem Fahrer geführt wird.

Mit anderen Worten wird in dem Fall, in welchem zumindest eine der Bedingungen nicht mehr erfüllt wird, diese nicht mehr erfüllte Bedingung dem Betrachter deutlich dargestellt. Darüber hinaus wird in den Warnzustand gewechselt, in welchem das Bedienelement zum Beenden des automatischen Fahrens betätigt werden kann.

Im Warnzustand kann auch ein weiteres Bedienelement aktiviert bzw. sensibilisiert werden (d.h. das weitere Bedienelement wird empfindlich geschaltet, um auf eine Betätigung des weiteren Bedienelements reagieren zu können). Wenn die Betätigung des weiteren Bedienelements erfasst wird, wechselt die erfindungsgemäße Vorrichtung aus dem Warnzustand zurück in den automatischen Fahrzustand, in welchem die erfindungsgemäße Vorrichtung zumindest eine vorbestimmte Zeit lang verbleibt.

Die Aktivierung bzw. Sensibilisierung des weiteren Bedienelements erfolgt insbesondere nur unter bestimmten Bedingungen. Beispielsweise kann das weitere Bedienelement aktiviert werden, wenn entweder die maximale Geschwindigkeit überschritten worden ist oder wenn der Abstand zu dem Führungsfahrzeug zu groß geworden ist. Dies kann beispielsweise der Fall sein, wenn sich ein Stau vorübergehend aufgelöst hat. Wenn der Fahrer in diesem Fall erfasst, dass die Stausituation in wenigen Sekunden wieder vorhanden sein wird, kann der Fahrer in diesem Fall die Beibehaltung des automatischen Fahrzustands erzwingen, obwohl bestimmte Bedingungen bzw. Voraussetzungen für die Beibehaltung des automatischen Fahrzustands verletzt sind. Werden die Bedingungen für die Beibehaltung des automatischen Fahrzustands nach einer vorbestimmten Zeitspanne (z.B. 10 s) nach Betätigung des weiteren Bedienelements immer noch verletzt, wechselt die erfindungsgemäße Vorrichtung erneut in den Warnzustand. Der Fahrer kann dann erneut das weitere Bedienelement betätigen, sofern dabei nicht eine weitere vorbestimmte Zeitspanne überschritten wird, während welcher die Bedingungen die Beibehaltung des automatischen Fahrzustands verletzt werden. Insgesamt kann der Fahrer den automatischen Fahrzustand durch die Betätigung des weiteren Bedienelements beispielsweise dreimal für einen Zeitraum von jeweils 10 Sekunden verlängern. Die Möglichkeit der Betätigung des weiteren Bedienelements kann dabei auch mittels eines auf der Anzeige dargestellten Textes angeboten und/oder durch eine weitere grafische Darstellung auf der Anzeige verdeutlicht werden.

Das weitere Bedienelement sollte nicht mit einem speziellen Bedienelement verwechselt werden, mit welchem die Aufmerksamkeit des Fahrers erfasst wird. Ein solches spezielles Bedienelement, welches auch als Totmannschalter bekannt ist, wird erfindungsgemäß eigentlich nicht benötigt. Daher umfasst eine bevorzugte erfindungsgemäße Vorrichtung kein solches spezielles Bedienelement.

Wenn nach einem vorbestimmten Zeitintervall nach Beginn des Warnzustands keine Betätigung des Bedienelements (und des weiteren Bedienelements) erfasst wird, kommt die erfindungsgemäße Vorrichtung insbesondere in einen Unterzustand des Warnzustands. In diesem Unterzustand wird im Wesentlichen auf der gesamten Anzeige eine Aufforderung zur Übernahme eines manuellen Fahrens des Fahrzeugs an einen Fahrer des Fahrzeugs zusammen mit einem erklärenden Text dargestellt. Darüber hinaus kann im Wechsel mit dieser Darstellung eine grafische Handlungsaufforderung zur Übernahme des Fahrens des Fahrzeugs an den Fahrer des Fahrzeugs auf der Anzeige dargestellt werden.

Mit anderen Worten wird in diesem Eskalationsschritt in verschiedenen Formen nur ein Hinweis zur bevorstehenden Übernahme des Fahrens des Fahrzeugs auf der Anzeige dargestellt, so dass andere Informationen (Anzeigekonzepte) auf der Anzeige nicht mehr dargestellt werden. Zeitgleich kann wiederholt ein kritischer Warnton ertönen und darüber hinaus ein Count-down-Zähler abwärts zählen.

Wenn innerhalb eines weiteren vorbestimmten Zeitintervalls keine Betätigung des Bedienelements (oder des weiteren Bedienelements) erfasst wird, wird vorteilhafterweise in einen Bremszustand gewechselt. In diesem Bremszustand stellt die erfindungsgemäße Vorrichtung den Bremszustand auf der Anzeige dar und bremst das Fahrzeug bis in den Stillstand ab. Die verbleibende Zeit bis zum Beginn des Abbremsens kann dabei auf der Anzeige dargestellt werden.

Durch den Bremszustand und damit durch das Abbremsen bis zum Stillstand wird verhindert, dass das Fahrzeug ohne jegliche Rückmeldung des Fahrers zu lange automatisch gefahren wird, wenn die Bedingungen für das automatische Fahren nicht mehr erfüllt sind.

Insbesondere wechselt die erfindungsgemäße Vorrichtung aus dem Bremszustand in einen sicheren Zustand, wenn der Stillstand des Fahrzeugs erfasst wird. In diesem sicheren Zustand wird auf der Anzeige zum einen der sichere Zustand und zum anderen eine Betätigungsoption dargestellt, wobei die Betätigungsoption angibt, wie der Fahrer aus dem sicheren Zustand in den manuellen Fahrzustand wechseln kann.

Erfolgt beim automatischen Fahren keine Rückmeldung des Fahrers, obwohl zumindest eine Bedingung für das automatische Fahren nicht mehr erfüllt ist, wird demnach das Fahrzeug durch Abbremsen vorteilhafterweise automatisch in den sicheren Zustand gebracht.

Wird in dem sicheren Zustand die gleichzeitige Betätigung der Bremse des Fahrzeugs und eines Bedienelements erfasst, wechselt die erfindungsgemäße Vorrichtung in den manuellen Fahrzustand, in welchem das Fahrzeug ganz normal manuell von dem Fahrer gefahren werden kann.

Die erforderliche kombinierte Betätigung der Bremse und des Bedienelements zum Wechsel in den manuellen Fahrzustand soll verhindern, dass der sichere Zustand ungewollt (beispielsweise durch einen ohnmächtigen Fahrer) verlassen wird.

Insbesondere kann der automatische Fahrzustand durch die Betätigung eines Abbruch-Bedienelements beendet werden, wodurch die erfindungsgemäße Vorrichtung in den manuellen Fahrzustand kommt, in welchem das Fahrzeug ganz normal manuell von dem Fahrer des Fahrzeugs geführt wird.

Die Betätigung des Abbruch-Bedienelements bietet vorteilhafterweise eine Möglichkeit, den automatischen Fahrzustand auf einfache Weise jederzeit zu verlassen, um in den manuellen Fahrzustand zurückzukehren.

Im Rahmen der vorliegenden Erfindung kann auch ein Fahrzeug bereitgestellt werden, welches eine erfindungsgemäße Vorrichtung umfasst. Es kann auch eine nicht beanspruchte Vorrichtung für ein Fahrzeug bereitgestellt werden, welches zum automatischen Fahren ausgestaltet ist, wobei die Vorrichtung mindestens einen Sensor und eine Steuerung, aber nicht unbedingt eine Anzeige umfasst. Der mindestens eine Sensor ist dabei ausgestaltet, um eine oder mehrere Informationen, beispielsweise aus der oben beschriebenen Informationsmenge zu erfassen. Die Vorrichtung ist ausgestaltet, um den automatischen Fahrzustand und um die mehreren Bedingungen, welche einzuhalten sind, um den automatischen Fahrzustand beizubehalten, anhand der Information(en) zu erfassen.

Für diese Vorrichtung existieren folgende Varianten:
- Wenn zumindest eine dieser Bedingungen nicht mehr eingehalten wird, aktiviert die Vorrichtung gemäß der ersten Variante das Bedienelement (zum Beispiel einen Schalter oder einen Taster) und wechselt in den manuellen Fahrzustand, wenn die Vorrichtung die Betätigung des Bedienelements erfasst.
- Gemäß der zweiten Variante bremst die Vorrichtung das Fahrzeug bis zum Stillstand ab, um in den gesicherten Zustand zu kommen, wenn zumindest eine der Bedingungen nicht mehr eingehalten wird und über eine vorbestimmte Zeitspanne hinweg keine Rückmeldung des Fahrers erfasst wird. Aus diesem gesicherten Zustand kommt die Vorrichtung dann nur, wenn die Vorrichtung zum einen die Betätigung der Bremsen des Fahrzeugs und zum anderen die Betätigung eines weiteren Bedienelements (beispielsweise das oben beschriebene Bedienelement zum Wechsel in den manuellen Fahrzustand) erfasst wird.

Natürlich ist es erfindungsgemäß auch möglich, dass die beiden Varianten die oben beschriebene Anzeige und die damit beschriebenen Anzeigekonzepte mit umfassen. Die vorliegende Erfindung erlaubt dem Fahrer vorteilhafterweise, den Status, in welchem sich das Fahrzeug beim automatischen Fahren befindet, rasch zu erfassen und sich insbesondere darüber bewusst zu werden, dass das automatische Fahren unter bestimmten Voraussetzungen fortgeführt werden kann. Diese Kenntnis und das Wissen über den eigentlichen Leistungsumfang des automatischen Fahrens sind eng mit der Ausbildung eines angemessenen Systemvertrauens seitens des Fahrers verknüpft. Diese Ausbildung eines angemessenen Systemvertrauens ist im Zusammenspiel zwischen Fahrer und System eine der entscheidenden Voraussetzungen für eine erfolgreiche Mensch-Fahrzeug-Interaktion.

Das automatische Fahren kann nur in gewissen Grenzen (z. B. nur im Stau) eingesetzt werden, so dass der Fahrer zwangsläufig in der Lage sein muss, die Fahraufgabe mit oder nahezu ohne zeitliche Reserve wieder zu übernehmen. Die vorliegende Erfindung unterstützt den Fahrer, sich trotz ausgeführter Nebenaufgabe rasch einen Überblick über die aktuelle Situation des automatischen Fahrens oder über die Wahrscheinlichkeit, dass er das Fahrzeug bald wieder übernehmen muss, zu verschaffen. Insbesondere sorgt die vorliegende Erfindung dafür, dass die Beendigung des automatischen Fahrens und die Aufforderung, die Fahraufgabe wieder zu übernehmen, für den Fahrer klar ersichtlich sind.

Die vorliegende Erfindung ist insbesondere für Kraftfahrzeuge geeignet, kann aber auch für spurgeführte Fahrzeuge sowie Flugzeuge oder Schiffe eingesetzt werden.

Im Folgenden wird die vorliegende Erfindung anhand bevorzugter erfindungsgemäßer Ausführungsformen mit Bezug zu den Figuren im Detail erläutert.
Fig. 1 stellt eine erfindungsgemäße Anzeige im automatischen Fahrzustand dar.
Fig. 2 stellt eine erfindungsgemäße Anzeige im Warnzustand dar.
Figuren 3 und 4 stellen eine erfindungsgemäße Anzeige bei länger vorliegendem Warnzustand dar.
Fig. 5 stellt eine erfindungsgemäße Anzeige im Bremszustand dar.
Fig. 6 stellt eine erfindungsgemäße Anzeige im gesicherten Zustand dar
Fig. 7 stellt ein erfindungsgemäßes Fahrzeug mit einer erfindungsgemäßen Vorrichtung dar.

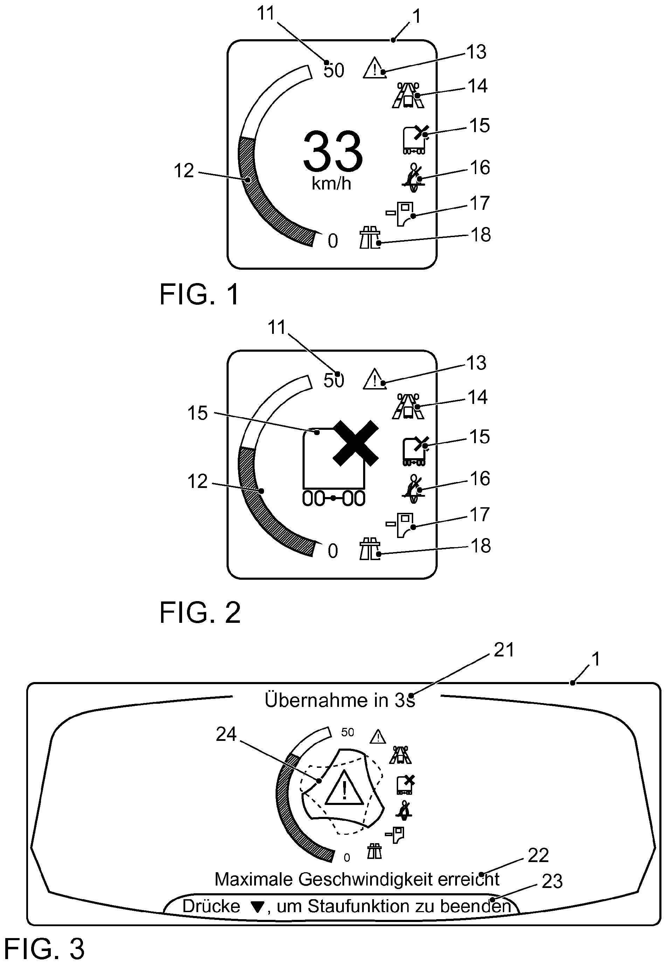

In Fig. 1 ist eine Anzeige 1 im automatischen Fahrzustand dargestellt. Dabei wird zum einen die aktuelle Geschwindigkeit 12 des automatisch fahrenden Fahrzeugs in Form eines Balkens und als Zahlenwert in der Mitte der Anzeige 1 dargestellt. Zum anderen wird die Höchstgeschwindigkeit 11 (maximale Geschwindigkeit) dargestellt, welche eine Systemgrenze repräsentiert, ab welcher das automatische Fahren nicht mehr möglich ist. Wenn die aktuelle Geschwindigkeit 12 die maximale Geschwindigkeit 11 übersteigt oder wenn beispielsweise das Führungsfahrzeug verloren wird (das sich aufgrund eines auflösenden Staus mit einer Geschwindigkeit von mehr als 50 km/h entfernt), wird eine Übergabeprozedur eingeleitet, an dessen Ende der Fahrer die Fahraufgabe des Fahrzeugs wieder selbst ausführt. Damit repräsentiert der Geschwindigkeitsbalken 12 zugleich eine Übernahme-Wahrscheinlichkeit (d.h. die Wahrscheinlichkeit, mit welcher von dem automatischen Fahrzustand in den manuellen Fahrzustand gewechselt wird). Da mit steigender Geschwindigkeit (längerer Balken) diese Übernahme-Wahrscheinlichkeit ansteigt, verfärbt sich der Geschwindigkeitsbalken 12 (beispielsweise gelblich), wenn ein vorbestimmter Schwellenwert (beispielsweise 45 km/h) überschritten wird, so dass die Anzeige 1 einen warnenden Charakter erhält.

Auf der rechten Seite der Anzeige 1 werden notwendige Voraussetzungen für den automatischen Fahrzustand in Form von Symbolen 13-18 dargestellt. Der automatische Fahrzustand kann nur beibehalten werden, wenn diese Voraussetzungen bzw. Bedingungen erfüllt sind. Im Folgenden wird die Bedeutung der Symbole 13-18 erläutert.
- Symbol 13:: Die aktuelle Geschwindigkeit 12 des Fahrzeugs übersteigt die maximale Geschwindigkeit 11.
- Symbol 14:: Es werden keine Spurmarkierungen auf der aktuell von dem Fahrzeug befahrenen Fahrbahn erkannt.
- Symbol 15:: Es wird kein Führungsfahrzeug erkannt. In der Regel ist dies dann der Fall, wenn der Abstand zwischen dem direkt vor dem Fahrzeug fahrenden Fahrzeug und dem Fahrzeug einen vorbestimmten Schwellenwert übersteigt
- Symbol 16:: Der Fahrer des Fahrzeugs ist nicht angeschnallt oder eine Tür des Fahrzeugs ist offen.
- Symbol 17:: Ein Objekt, welches kein Fahrzeug ist, wird vor dem Fahrzeug erfasst.
- Symbol 18:: Der Typ der Straße, auf welcher das Fahrzeug aktuell fährt, entspricht keinem Straßentyp, für welchen das automatische Fahren ausgelegt ist.

Solange alle notwendigen Voraussetzungen oder Bedingungen für den automatischen Fahrzustand erfüllt sind, sind die Symbole 13-18 auf der Anzeige 1 zwar sichtbar, aber ausgegraut, woran der Fahrer erkennt, dass alle Bedingungen erfüllt sind.

Mit anderen Worten müssen folgende Voraussetzungen bzw. Bedingungen erfüllt sein, damit der automatische Fahrzustand beibehalten wird:
- Die aktuelle Geschwindigkeit 12 des Fahrzeugs liegt unterhalb der maximalen Geschwindigkeit 11.
- Es werden Spurmarkierungen erkannt.
- Es wird ein Führungsfahrzeug erkannt.
- Der Fahrer ist angeschnallt und keine Tür des Fahrzeugs ist offen.
- Vor dem Fahrzeug wird kein Objekt, welches kein anderes Fahrzeug ist, erkannt.
- Das Fahrzeug fährt auf einem für das automatische Fahren zugelassenen Straßentyp (beispielsweise einer Autobahn).

Die Darstellung der Symbole 13-18 macht dem Fahrer die Systemgrenzen bewusst und hilft somit, ein angemessenes Systemvertrauen auszubilden und ein Situationsbewusstsein zu unterstützen. Wenn erfasst wird, dass eine der Bedingungen für das automatische Fahren nicht mehr erfüllt wird, kann der Zustand des automatischen Fahrens nicht länger aufrechterhalten werden und die Fahraufgabe wird von der erfindungsgemäßen Vorrichtung an den Fahrer zurück übertragen. Wenn dies der Fall ist (das heißt mindestens eine Bedingung 15 für das automatische Fahren wird nicht mehr erfüllt), kommt die erfindungsgemäße Vorrichtung in einen Warnzustand und in einem ersten Schritt wird das entsprechende Symbol 15, welches diejenige Bedingung repräsentiert, welche nicht mehr erfüllt wird, gegenüber den anderen Symbolen hervorgehoben. Zusätzlich wird diese Bedingung 15 (z. B. Führungsfahrzeug nicht mehr vorhanden) im Vergleich zu den anderen Bedingungen vergrößert in der Mitte der Anzeige 1 dargestellt, wie es in Fig. 2 abgebildet ist. Zeitgleich kann ein Warnton niederer Priorität ertönen und/oder der Fahrer kann per Text beispielsweise auf der Anzeige 1 (z.B. dem Kombi-Display) dazu aufgefordert werden, die Fahraufgabe des Fahrzeugs wieder zu übernehmen und dazu ein bestimmtes Bedienelement (beispielsweise eine "OK"-Taste am Lenkrad des Fahrzeugs) zu betätigen, um damit die manuelle Übernahme der Führung des Fahrzeugs zu bestätigen und einzuleiten. Darüber hinaus kann dem Fahrer auf der Anzeige 1 ein Count-down-Zähler angezeigt werden, welcher die verbleibende Zeit in Sekunden angibt, in welcher der Fahrer die Fahraufgabe wieder manuell übernehmen sollte. Dieser erste Schritt wird für eine vorbestimmte Zeitdauer (beispielsweise 3 Sekunden) angezeigt.

Erfolgt innerhalb dieser vorbestimmten Zeitdauer keine Rückmeldung des Fahrers, kommt die erfindungsgemäße Vorrichtung in einen speziellen Unterzustand des Warnzustands und in einem zweiten Schritt wird eine Aufforderung 24 zur Übernahme der Fahraufgabe auf der gesamten Anzeige 1 (und nicht mehr nur in einem Teilbereich bei den Figuren 1 und 2), dargestellt, wie es in Fig. 3 abgebildet ist. Andere Anzeigekonzepte werden in diesem Unterzustand bzw. zweiten Schritt nicht mehr auf der Anzeige 1 dargestellt. Zeitgleich kann wiederholt ein im Vergleich zum ersten Schritt kritischer Warnton ertönen. Darüber hinaus kann wiederum der Count-down-Zähler angezeigt werden und ein erklärender Text 22 kann dem Fahrer in schriftlicher Form erläutern, welche Bedingung für das automatische Fahren nicht mehr erfüllt ist.

Um den Fahrer weiter zu unterstützen, wird in diesem Unterzustand eine grafische Handlungsaufforderung 25 zur Übernahme der Fahraufgabe auf der Anzeige 1 im Wechsel mit der in Fig. 3 dargestellten Darstellung auf der Anzeige 1 präsentiert. Die grafische Handlungsaufforderung 25 zeigt schematisch ein Lenkrad und das zur Übernahme der Fahraufgabe zu betätigende Bedienelement. Auch bei dieser Darstellung kann der Count-down-Zähler 21 angezeigt werden und zudem der Fahrer mittels eines Textes aufgefordert werden, die Fahraufgabe wieder zu übernehmen.

Unter bestimmten Bedingungen wird im Warnzustand von der erfindungsgemäßen Vorrichtung die Option angeboten, den Warnzustand zu verlassen und wieder in den automatischen Fahrzustand zurückzukehren. Diese Option wird beispielsweise dann angeboten, wenn die maximale Geschwindigkeit überschritten ist und/oder kein Führungsfahrzeug mehr erfasst wird, obwohl der Fahrer erkennt, dass sich der Stau nur vorübergehend oder nur phasenweise aufgelöst hat. Durch die Betätigung eines weiteren Bedienelements (beispielsweise einer Lenkradtaste ("Pfeil hoch")) kann der Fahrer in diesem Fall eine vorbestimmte Anzahl oft (beispielsweise dreimal) für jeweils einen vorbestimmten Zeitraum (beispielsweise 10 Sekunden) wieder in den automatischen Fahrzustand kommen. Diese Option kann auf der Anzeige 1 mittels Text angeboten und/oder durch eine entsprechende grafische Darstellung verdeutlicht werden.

Im Zustand des automatischen Fahrens im Stau kann es vorkommen, dass Objekte (keine Fahrzeuge, sondern z.B. Personen) in dem Raum zwischen dem Fahrzeug und dem Führungsfahrzeug detektiert werden. In diesem Fall wird das entsprechende Symbol 17 in der Anzeige 1 hervorgehoben und vergrößert in der Mitte der Anzeige 1 dargestellt. Darüber hinaus wird der Fahrer mit Hilfe eines Textes darüber informiert, dass ein Objekt in der Fahrspur vor dem Fahrzeug detektiert wurde und dass das Fahrzeug aus diesem Grund nicht weiter dem Führungsfahrzeug folgen wird. Gleichzeitig kann der Fahrer über einen unkritischen Warnton gewarnt werden. Wird anschließend in dem Raum zwischen dem Fahrzeug und dem Führungsfahrzeug kein Objekt mehr detektiert und sind alle weiteren Bedingungen für den automatischen Fahrzustand erfüllt, wird der Fahrer dennoch aufgefordert, die Fortführung des Zustands des automatischen Fahrens durch die Betätigung des weiteren Bedienelements zu bestätigen. Nur wenn diese Bestätigung erfolgt, verbleibt die erfindungsgemäße Vorrichtung in dem Zustand des automatischen Fahrens. Erfolgt keine Bestätigung innerhalb eines vorbestimmten Zeitrahmens, wird die vorab und im Folgenden beschriebene Übernahme-Prozedur eingeleitet. Durch diese Vorgehensweise wird verhindert, dass beispielsweise medizinische Notfälle in solchen Situationen nicht erfasst werden.

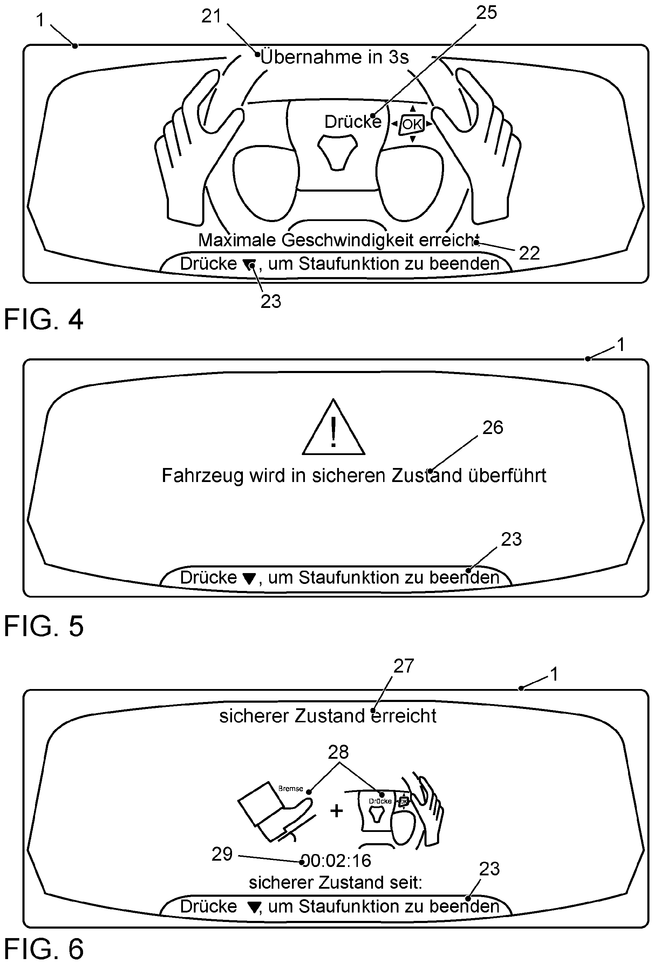

Wenn der Fahrer im Warnzustand nicht reagiert und bis zum Ablaufen des Count-down-Zählers weder das Bedienelement noch das weitere Bedienelement noch ein Abbruch-Bedienelement, mit welchem das automatische Fahren abgebrochen werden kann, betätigt, kommt die erfindungsgemäße Vorrichtung in einen Bremszustand, in welchem das Fahrzeug bis zum Stillstand abgebremst wird. In diesem Bremszustand wird dem Fahrer auf der Anzeige 1 die in Fig. 5 abgebildete Darstellung angezeigt, in welcher hauptsächlich der Bremszustand in Form einer Zustandsbeschreibung 26 (Text: "Fahrzeug wird in sicheren Zustand überführt" und entsprechendes Warnsymbol) abgebildet wird. Der Bremszustand, in welchem das Fahrzeug in einen sicheren Zustand überführt wird, kann auch zusätzlich durch einen entsprechenden akustischen Warnhinweis kenntlich gemacht werden.

Als Abbruch-Bedienelement kann beispielsweise eine Lenkradtaste ("Pfeil nach unten") oder ein Bremspedal dienen, so dass durch die Betätigung der entsprechenden Lenkradtaste oder durch die Betätigung der Bremsen des Fahrzeugs durch den Fahrer der automatische Fahrzustand verlassen wird und das Fahrzeug wieder vom Fahrer manuell geführt wird. Die Möglichkeit der Betätigung der Lenkradtaste ist dabei als Option 23 abgebildet, so dass auch im Warnzustand durch die Betätigung dieser Lenkradtaste die manuelle Führung des Fahrzeugs wieder übernommen werden kann, was dem Verlassen der Staufunktion oder Staufahrfunktion entspricht. Eine Ausnahme können der Bremszustand und ein gesicherter Zustand (siehe unten) bilden. In diesen beiden Zuständen kann unter Umständen nicht durch die Betätigung des Abbruch-Bedienelements zum manuellen Führen des Fahrzeugs übergeleitet werden.

Wenn das Fahrzeug im Bremszustand bis zum Stillstand des Fahrzeugs abgebremst worden ist, kommt die erfindungsgemäße Vorrichtung in den sicheren Zustand, in welchem das Fahrzeug mit geschlossenen Bremsen stehen bleibt. In diesem sicheren Zustand wird dem Fahrer auf der Anzeige 1 die in Fig. 6 abgebildete Darstellung angezeigt. Zum einen wird der sichere Zustand in Form einer Zustandsbeschreibung 27 (Text: "sicherer Zustand erreicht") beschrieben. Zum anderen wird die Zeitspanne 29, seit welcher sich das Fahrzeug oder die erfindungsgemäße Vorrichtung in dem sicheren Zustand befindet, angezeigt. Durch das Anzeigen dieser Zeitspanne können für den Fall, dass der Fahrer einen medizinischen Notfall erlitten hat, Rettungskräfte darüber informiert werden, wie lange der Fahrer mindestens handlungsunfähig ist. Darüber hinaus wird in Form einer Handlungsanweisung 28 auf der Anzeige 1 angezeigt, wie der sichere Zustand verlassen werden kann, um das Fahrzeug wieder manuell zu führen. Dies ist beispielsweise durch das gleichzeitige Betätigen der Bremse des Fahrzeugs und des Bedienelements (z.B. "OK"-Taste) möglich. Diese gleichzeitige kombinierte Betätigung der Bremse und des Bedienelements soll verhindern, dass der gesicherte Zustand ungewollt (beispielsweise durch eine ohnmächtige Person) verlassen wird.

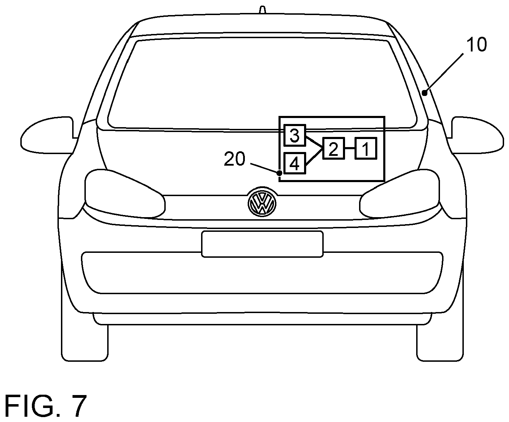

Schließlich wird Fig. 7 ein erfindungsgemäßes Fahrzeug 10 mit einer erfindungsgemäßen Vorrichtung 20 dargestellt. Dabei umfasst die erfindungsgemäße Vorrichtung 20 neben der Anzeige 1 eine Steuerung 2 und als Sensoren eine Kamera 3 und ein Radar 4.

### Bezugszeichenliste

- 1: Anzeige
- 2: Steuerung
- 3: Kamera
- 4: Radar
- 10: Fahrzeug
- 11: maximale Geschwindigkeit
- 12-18: Bedingung
- 20: Vorrichtung
- 21: Count Down Zähler
- 22: erklärender Text
- 23: Option
- 24: Aufforderung zur Übernahme
- 25: Handlungsaufforderung
- 26, 27: Zustandsbeschreibung
- 28: Handlungsanweisung
- 29: Zähler

## Patentansprüche

1. Vorrichtung für ein Fahrzeug (10), welches zum zumindest teilweisen automatischen Fahren ausgestaltet ist,
wobei die Vorrichtung (20) mindestens einen Sensor (3, 4), eine Steuerung (2) und eine Anzeige (1) umfasst,
wobei der mindestens eine Sensor (3, 4) ausgestaltet ist, um mehrere Informationen zu erfassen,
**dadurch gekennzeichnet,**
**dass** die Vorrichtung (20) ausgestaltet ist, um einen automatischen Fahrzustand, in welchem das Fahrzeug (10) automatisch fährt, zu erfassen und um in dem automatischen Fahrzustand mehrere Bedingungen (12-18), welche einzuhalten sind, um den automatischen Fahrzustand beizubehalten, zusammen mit einer Information, ob die jeweilige Bedingung erfüllt ist, gleichzeitig auf der Anzeige (1) darzustellen, und dass die Vorrichtung (20) ausgestaltet ist, um eine Einhaltung der Bedingungen (12-18) abhängig von den mehreren Informationen zu bestimmen.

2. Vorrichtung nach Anspruch 1,
**dadurch gekennzeichnet,**
**dass** die mehreren Informationen ausgewählt sind aus einer Menge umfassend:
• eine aktuelle Geschwindigkeit des Fahrzeugs (10),
• eine Information, ob ein vor dem Fahrzeug (10) befindliches Fahrzeug einen ausreichend geringen Abstand zu dem Fahrzeug (10) aufweist,
• eine Information, ob eine Spurmarkierung auf einer von dem Fahrzeug (10) aktuell befahrenen Straße vorhanden ist,
• einen Öffnungszustand einer Tür des Fahrzeugs (10),
• eine Information, ob ein Fahrer des Fahrzeugs (10) angeschnallt ist, und
• eine Information, ob sich vor dem Fahrzeug (10) innerhalb eines vorbestimmten Abstands von dem Fahrzeug (10) ein Objekt befindet, und
• einen Typ der aktuell von dem Fahrzeug (10) befahrenen Straße.

3. Vorrichtung nach Anspruch 1 oder 2,
**dadurch gekennzeichnet,**
**dass** die Vorrichtung (20) ausgestaltet ist, um abhängig von der aktuellen Geschwindigkeit des Fahrzeugs (10) eine Wahrscheinlichkeit auf der Anzeige (1) darzustellen, mit welcher der automatische Fahrzustand zu beenden ist.

4. Vorrichtung nach einem der vorhergehenden Ansprüche,
**dadurch gekennzeichnet,**
**dass** die Vorrichtung (20) ausgestaltet ist, um, wenn eine der Bedingungen nicht mehr erfüllt wird, aus dem automatischen Fahrzustand in einen Warnzustand zu gelangen, dass die Vorrichtung (20) ausgestaltet ist, in dem Warnzustand diejenige der Bedingungen, welche nicht mehr erfüllt wird, gegenüber den anderen Bedingungen deutlich hervorzuheben und/oder in einem mittleren Bereich der Anzeige (1) größer darzustellen als die Bedingungen, welche erfüllt sind, und ein Bedienelement zu aktivieren, und
**dass** die Vorrichtung (20) ausgestaltet ist, um eine Betätigung des aktivierten Bedienelements zu erfassen und um das automatische Fahren des Fahrzeugs (10) zu beenden, wenn die Betätigung des aktivierten Bedienelements erfasst wurde, um so aus dem Warnzustand in einen manuellen Fahrzustand zu kommen.

5. Vorrichtung nach Anspruch 4,
**dadurch gekennzeichnet,**
**dass** die Vorrichtung (20) ausgestaltet ist, in dem Warnzustand ein weiteres Bedienelement zu aktivieren, eine Betätigung des weiteren Bedienelements zu erfassen und aus dem Warnzustand in den automatischen Fahrzustand zurückzukommen, wenn die Betätigung des aktivierten weiteren Bedienelements erfasst wurde.

6. Vorrichtung nach Anspruch 4 oder 5,
**dadurch gekennzeichnet,**
**dass** die Vorrichtung (20) ausgestaltet ist, um innerhalb des Warnzustands nach einem vorbestimmten Zeitintervall nach Beginn des Warnzustands in einen Unterzustand des Warnzustands zu kommen, wenn innerhalb des Zeitintervalls keine Betätigung des Bedienelements erfasst wird, und
**dass** die Vorrichtung (20) ausgestaltet ist, um in dem Unterzustand auf der gesamten Anzeige (1) eine Aufforderung zur Übernahme eines Fahrens des Fahrzeugs (10) an einen Fahrer des Fahrzeugs (10) zusammen mit einem erklärenden Text darzustellen und um im Wechsel mit diesem Inhalt eine graphische Handlungsaufforderung zur Übernahme des Fahrens des Fahrzeugs (10) an den Fahrer des Fahrzeugs (10) auf der Anzeige (1) darzustellen.

7. Vorrichtung nach einem der Ansprüche 4-6,
**dadurch gekennzeichnet,**
**dass** die Vorrichtung (20) ausgestaltet ist, um nach einer vorbestimmten Zeitspanne nach Beginn des Warnzustands in einen Bremszustand zu gelangen, wenn innerhalb der Zeitspanne keine Betätigung des Bedienelements erfasst wird,
**dass** die Vorrichtung (20) ausgestaltet ist, um in dem Bremszustand den Bremszustand auf der Anzeige (1) darzustellen und um in dem Bremszustand das Fahrzeug (10) anzuweisen, bis in den Stillstand abzubremsen, und
**dass** die Vorrichtung (20) ausgestaltet ist, um in dem Warnzustand die verbleibende Zeitspanne auf der Anzeige (1) anzuzeigen.

8. Vorrichtung nach Anspruch 7,
**dadurch gekennzeichnet,**
**dass** die Vorrichtung (20) ausgestaltet ist, um einen Stillstand des Fahrzeugs (10) zu erfassen und um aus dem Bremszustand in einen sicheren Zustand zu gelangen, wenn der Stillstand des Fahrzeugs (10) erfasst wird, und
**dass** die Vorrichtung (20) ausgestaltet ist, um in dem sicheren Zustand auf der Anzeige (1) den sicheren Zustand und eine Betätigungsoption, um aus dem sicheren Zustand in den manuellen Fahrzustand zu kommen, darzustellen.

9. Vorrichtung nach Anspruch 8,
**dadurch gekennzeichnet,**
**dass** die Vorrichtung (20) ausgestaltet ist, um eine Betätigung einer Bremse des Fahrzeugs (10) zu erfassen und um aus dem sicheren Zustand in den manuellen Fahrzustand zu kommen, wenn die gleichzeitige Betätigung der Bremse und des Bedienelements erfasst wurde.

10. Vorrichtung nach einem der vorhergehenden Ansprüchen,
**dadurch gekennzeichnet,**
**dass** die Vorrichtung (20) ausgestaltet ist, um eine Betätigung eines Abbruch-Bedienelements zu erfassen und um das automatische Fahren des Fahrzeugs (10) zu beenden, wenn die Betätigung des Abbruch-Bedienelements erfasst wird.

## Claims

1. Device for a vehicle (10) which is designed for at least partially automatic driving,
wherein the device (20) comprises at least one sensor (3, 4), a controller (2) and a display (1),
wherein the at least one sensor (3, 4) is designed so as to sense multiple items of information,
**characterized in that** the device (20) is designed so as to sense an automatic driving state in which the vehicle (10) is driving automatically and so as in the automatic driving state to show simultaneously on the display (1) multiple conditions (12-18) that have to be met in order to maintain the automatic driving state, together with an item of information as to whether the respective condition is satisfied, and
**in that** the device (20) is designed so as to determine, dependent on the multiple items of information, whether the conditions (12-18) are met.

2. Device according to Claim 1,
**characterized**
**in that** the multiple items of information are selected from a set comprising:
• a current speed of the vehicle (10),
• an item of information as to whether a vehicle located in front of the vehicle (10) is at a sufficiently small distance from the vehicle (10),
• an item of information as to whether there is a lane marking on a road currently being driven along by the vehicle (10),
• an open state of a door of the vehicle (10),
• an item of information as to whether a driver of the vehicle (10) is using a seatbelt, and
• an item of information as to whether there is an object in front of the vehicle (10) within a predetermined distance from the vehicle (10), and
• a type of road currently being driven along by the vehicle (10).

3. Device according to Claim 1 or 2,
**characterized**
**in that** the device (20) is designed so as to show on the display (1), dependent on the current speed of the vehicle (10), a probability with which the automatic driving state will have to be ended.

4. Device according to one of the preceding claims,
**characterized**
**in that** the device (20) is designed so as to go from the automatic driving state into a warning state if one of the conditions is no longer satisfied,
**in that** the device (20) is designed so as in the warning state to clearly highlight that one of the conditions that is no longer satisfied in comparison with the other conditions and/or to show it in a middle region of the display (1) larger than the conditions that are satisfied and to activate an operator control element, and
**in that** the device (20) is designed so as to sense the actuation of the activated operator control element and to end the automatic driving of the vehicle (10) when the actuation of the activated operator control element has been sensed in order in this way to go from the warning state into a manual driving state.

5. Device according to Claim 4,
**characterized**
**in that** the device (20) is designed so as in the warning state to activate a further operator control element, to sense an actuation of the further operator control element and to return from the warning state to the automatic driving state when the actuation of the activated further operator control element has been sensed.

6. Device according to Claim 4 or 5,
**characterized**
**in that** the device (20) is designed so as within the warning state to go into a substate of the warning state after a predetermined time interval after the beginning of the warning state if no actuation of the operator control element is sensed within the time interval, and
**in that** the device (20) is designed so as in the substate to show a request for the takeover of driving of the vehicle (10) together with an explanatory text to a driver of the vehicle (10) on the entire display (1) and to show a graphical handling request for the takeover of driving of the vehicle (10) to the driver of the vehicle (10) on the display (1) in alternation with this content.

7. Device according to one of Claims 4-6,
**characterized**
**in that** the device (20) is designed so as to go into a braking state after a predetermined time period after the beginning of the warning state if within the time period no actuation of the operator control element is sensed,
**in that** the device (20) is designed so as in the braking state to show the braking state on the display (1) and so as in the braking state to instruct the vehicle (10) to be braked to a standstill, and
**in that** the device (20) is designed so as in the warning state to display the remaining time period on the display (1).

8. Device according to Claim 7,
**characterized**
**in that** the device (20) is designed so as to sense a standstill of the vehicle (10) and to go from the braking state into a safe state if the standstill of the vehicle (10) is sensed, and
**in that** the device (20) is designed so as in the safe state to show on the display (1) the safe state and an actuating option to go from the safe state into the manual driving state.

9. Device according to Claim 8,
**characterized**
**in that** the device (20) is designed so as to sense an actuation of a brake of the vehicle (10) and so as to go from the safe state into the manual driving state when the simultaneous actuation of the brake and the operator control element has been sensed.

10. Device according to one of the preceding claims,
**characterized**
**in that** the device (20) is designed so as to sense an actuation of a terminating operator control element and so as to end the automatic driving of the vehicle (10) if the actuation of the terminating operator control element is sensed.

## Revendications

1. Dispositif pour un véhicule (10), lequel est configuré en vue de la conduite automatique, tout au moins en partie ;
selon lequel le dispositif (20) comprend au moins un capteur (3, 4), une commande (2) et un affichage (1) ; selon lequel l'au moins un capteur (3, 4) est configuré en vue de détecter plusieurs informations ;
**caractérisé en ce que**
le dispositif (20) est configuré en vue de détecter un état de conduite automatique, dans lequel le véhicule (10) est en conduite automatique, et en vue de représenter simultanément sur l'affichage (1) plusieurs conditions (12 à 18) dans cet état de conduite automatique, auxquelles il est nécessaire de se conformer en vue de maintenir cet état de conduite automatique, conjointement avec une information permettant de savoir si la condition respective est remplie ; et **caractérisé en ce que** le dispositif (20) est configuré en vue de déterminer si les conditions (12 à 18) sont respectées en fonction de plusieurs informations.

2. Dispositif selon la revendication 1,
**caractérisé en ce que**
les plusieurs informations sont sélectionnées à partir d'une certaine quantité de critères comprenant :
• une vitesse actuelle du véhicule (10) ;
• une information permettant de savoir si un autre véhicule qui précède le véhicule (10) présente une distance suffisamment faible par rapport au véhicule (10) ;
• une information permettant de savoir si un marquage au sol est présent sur une route en train d'être parcourue par le véhicule (10) ;
• un état d'ouverture d'une portière du véhicule (10) ;
• une information permettant de savoir si un conducteur du véhicule (10) a attaché sa ceinture de sécurité ; et
• une information permettant de savoir si un objet se trouve sur la route du véhicule (10), à l'intérieur d'une distance prédéterminée par rapport au véhicule (10) ; et
• un type de la route actuellement parcourue par le véhicule (10).

3. Dispositif selon la revendication 1 ou 2,
**caractérisé en ce que**
le dispositif (20) est configuré en vue de représenter sur l'affichage (1), en fonction de la vitesse actuelle du véhicule (10), une probabilité, avec laquelle l'état de conduite automatique doit prendre fin.

4. Dispositif selon l'une des revendications précédentes,
**caractérisé en ce que**
le dispositif (20) est configuré en vue de passer de l'état de conduite automatique à un état d'avertissement, quand l'une des conditions n'est plus remplie ; **caractérisé en ce que**
le dispositif (20) est configuré en vue de faire clairement remarquer laquelle des conditions n'est plus remplie, par rapport aux autres conditions qui sont remplies, quand ledit dispositif se trouve à l'état d'avertissement, et/ou en vue de représenter de manière plus importante, dans une zone centrale de l'affichage (1), la condition qui n'est plus remplie par rapport aux autres conditions qui sont remplies, et en vue d'activer un élément de commande ; et
**caractérisé en ce que**
le dispositif (20) est configuré en vue de détecter un actionnement de l'élément de commande activé et en vue de mettre fin à la conduite automatique du véhicule (10), quand l'actionnement de l'élément de commande activé a été détecté, afin de passer, de la sorte, de cet état d'avertissement à un état de conduite manuelle.

5. Dispositif selon la revendication 4,
**caractérisé en ce que**
le dispositif (20) est configuré en vue d'activer un autre élément de commande dans l'état d'avertissement, en vue de détecter un actionnement de cet autre élément de commande et en vue de repasser de cet état d'avertissement à l'état de conduite automatique, quand l'actionnement de l'autre élément de commande activé a été détecté.

6. Dispositif selon la revendication 4 ou 5,
**caractérisé en ce que**
le dispositif (20) est configuré en vue de passer, quand il se trouve dans l'état d'avertissement, à l'issue d'un intervalle de temps prédéterminé suivant le début de cet état d'avertissement, dans un sous-état de l'état d'avertissement, quand aucun actionnement de l'élément de commande n'est détecté durant cet intervalle de temps ; et
**caractérisé en ce que**
le dispositif (20) est configuré en vue de représenter sur la totalité de l'affichage (1), en même temps qu'un texte explicatif, une invite à l'attention d'un conducteur du véhicule (10) et destinée à la prise en charge d'une conduite du véhicule (10), quand ledit dispositif se trouve dans ce sous-état de l'état d'avertissement, et en vue de représenter sur l'affichage (1), en alternance avec ce contenu, une invite graphique d'intervention à l'attention du conducteur du véhicule (10), en vue de la prise en charge de la conduite du véhicule (10).

7. Dispositif selon l'une des revendications 4 à 6,
**caractérisé en ce que**
le dispositif (20) est configuré en vue de passer à un état de freinage, à l'issue d'un laps de temps prédéterminé suivant le début de l'état d'avertissement, quand aucun actionnement de l'élément de commande n'est détecté durant ce laps de temps ;
**caractérisé en ce que**
le dispositif (20) est configuré en vue de représenter l'état de freinage sur l'affichage (1), quand ledit dispositif se trouve dans cet état de freinage, et en vue d'ordonner au véhicule (10) de passer dans cet état de freinage jusqu'à ce que le véhicule se trouve à l'arrêt sous l'action du freinage ; et
**caractérisé en ce que**
le dispositif (20) est configuré en vue d'afficher le laps de temps restant sur l'affichage (1), dans cet état d'avertissement.

8. Dispositif selon la revendication 7,
**caractérisé en ce que**
le dispositif (20) est configuré en vue de détecter un arrêt du véhicule (10) et en vue de passer de l'état de freinage à un état de sécurité, quand l'arrêt du véhicule (10) est détecté ; et
**caractérisé en ce que**
le dispositif (20) est configuré en vue de représenter cet état de sécurité sur l'affichage (1), quand ledit dispositif se trouve à l'état de sécurité, et en vue de représenter une option d'actionnement afin de passer de cet état de sécurité à l'état de conduite manuelle.

9. Dispositif selon la revendication 8,
**caractérisé en ce que**
le dispositif (20) est configuré en vue de détecter un actionnement d'un frein du véhicule (10) et en vue de passer de l'état de sécurité à l'état de conduite manuelle, quand l'actionnement simultané du frein et de l'élément de commande a été détecté.

10. Dispositif selon l'une des revendications précédentes,
**caractérisé en ce que**
le dispositif (20) est configuré en vue de détecter un actionnement d'un élément de commande d'annulation et en vue de mettre fin à la conduite automatique du véhicule (10), quand l'actionnement de l'élément de commande d'annulation est détecté.
